# EUROPÄISCHE PATENTSCHRIFT

(11) **EP 3 488 126 B1**
(45) Veröffentlichungstag und Bekanntmachung des Hinweises auf die Patenterteilung: **04.08.2021**
(21) Anmeldenummer: 17731125.5
(22) Anmeldetag: 14.06.2017
(51) Int. Cl.: F16H 61/04, F16H 61/688

(54) **VERFAHREN ZUM STEUERN EINES SCHALTVORGANGES IN EINEM ANTRIEBSSYSTEM SOWIE ANTRIEBSSYSTEM DAFÜR**
METHOD FOR CONTROLLING A SHIFTING OPERATION IN A DRIVE SYSTEM, AND DRIVE SYSTEM THEREFOR
PROCÉDÉ PERMETTANT DE COMMANDER UN CHANGEMENT DE VITESSE DANS UN SYSTÈME DE PROPULSION ET SYSTÈME DE PROPULSION À CET EFFET

(30) Priorität: 25.07.2016 DE 102016113690
(43) Veröffentlichungstag der Anmeldung: 29.05.2019
(73) Patentinhaber: Technische Universität Darmstadt, 64289 Darmstadt (DE)
(72) Erfinder: RINDERKNECHT, Stephan, 72810 Gomaringen (DE); KÖNIG, Ruben, 69502 Hemsbach (DE)
(74) Vertreter: 2K Patentanwälte Blasberg Kewitz & Reichel
(86) Internationale Anmeldenummer: PCT/EP2017/064599
(87) Internationale Veröffentlichungsnummer: WO 2018/019471

(56) Entgegenhaltungen:
- EP-A1- 1 610 038
- EP-A1- 2 186 703
- EP-A2- 2 450 599
- WO-A1-2009/021911
- CN-A- 103 144 528
- DE-A1-102007 038 772
- DE-A1-102011 117 853

## Beschreibung

### GEBIET DER ERFINDUNG

Die Erfindung betrifft ein Verfahren zum Steuern eines Schaltvorganges in einem Antriebssystem gemäß dem Oberbegriff des Anspruchs 1, sowie ein Antriebssystem nach dem Oberbegriff des Anspruchs 8. Insbesondere betrifft die Erfindung ein Verfahren und eine Vorrichtung zum Steuern eines Schaltvorganges in einem Antriebssystem, das als Hybrides Antriebssystem, insbesondere als P2- oder als P2-P3-Antriebssystem ausgebildet ist.

### HINTERGRUND DER ERFINDUNG

Antriebssysteme für Fahrzeuge und dergleichen weisen in der Regel mindestens ein mehrgängiges Getriebe auf, dessen Schaltvorgang mit Hilfe von Steuerungen möglichst optimal für den jeweiligen Anwendungsfall gesteuert werden soll. Dies gilt insbesondere für Automatikgetriebe oder Doppelkupplungsgetriebe. Ferner können Antriebssysteme verschiedenartige Motoren aufweisen, insbesondere hybride Anordnungen von Verbrennungs- und Elektromotoren, deren Drehmomente über das oder die angesteuerte/n mehrgängige/n Getriebe auf die Ausgangswelle des Antriebssystems geführt werden.

DE 10 2007 038 772 A1 offenbart ein Verfahren und eine Vorrichtung zur Durchführung einer zugkraftunterbrochenen Schaltung im Hybridbetrieb bei einem parallelen Hybridfahrzeug, umfassend ein automatisiertes Getriebe wobei im Rahmen der Schaltung der Verbrennungsmotor und die elektrische Maschine miteinander gekoppelt bleiben, wobei der Lastabbau vor dem Auslegen des alten Ganges und das Synchronisieren auf den neuen Gang durch den Betrieb der elektrischen Maschine erfolgen. Er werden also eine Vorrichtung und ein Verfahren zum Steuern eines mechanischen Schaltvorganges in einem Antriebssystem offenbart, das mindestens ein erstes mehrgängiges Getriebe mit einer ersten Eingangswelle und einem ersten mechanischen Schaltmittel aufweist, wobei von der ersten Eingangswelle kommende Drehmomente auf eine Ausgangswelle des Antriebssystems übertragen werden, und wobei die Drehmomente von einem Verbrennungsmotor und mindestens einem ersten Elektromotor erzeugt werden, wobei der erste Elektromotor während des Schaltvorgangs beim Schalten des ersten mechanischen Schaltmittels zumindest zeitweise zwecks Auslegens eines Ganges des ersten mehrgängigen Getriebes mit dem Verbrennungsmotor wirkverbunden und in einem Generator-Betrieb betrieben wird, wodurch der Verbrennungsmotor belastet und das erste mechanische Schaltmittel entlastet werden.

Aus der DE 10 2011 117 853 A1 ist ein hybrides Antriebssystem bekannt (siehe dort Abbildung 1), das zwei Elektromotoren (M1 und M2) aufweist, welche jeweils über ein schaltbares Teilgetriebe (TG1 bzw. TG2) mit der Ausgangswelle (AW) des Antriebssystems einzeln oder zusammenwirkend verbunden werden können. Außerdem kann dort ein Verbrennungsmotor (A1-5) mit der Eingangswelle an den zweiten Elektromotor (M2) angekoppelt werden, um als sogenannter "Range Extender" zu dienen (siehe dort Text [0039] ff). Der Schaltvorgang der beiden Teilgetriebe wird über eine (nicht dargestellte) Steuerungs-Vorrichtung gesteuert. Demnach ist ein Antriebssystem mit einer Steuerungs-Vorrichtung zum Steuern eines Schaltvorganges in dem Antriebssystem bekannt, wobei das Antriebssystem mindestens ein erstes mehrgängiges Getriebe mit einer ersten Eingangswelle und einem ersten mechanischen Schaltmittel aufweist, um von der ersten Eingangswelle kommende Drehmomente auf eine Ausgangswelle des Antriebssystems zu übertragen, und wobei ein Verbrennungsmotor und/oder mindestens ein erster Elektromotor die Drehmomente erzeugt. Das dort offenbarte Antriebskonzept wird auch als "Two-Drive-Transmission" bezeichnet und bietet die Möglichkeit für ein zugkraftunterbrechungsfreies Schalten und zwar in diesem Fall bei rein elektrischem Fahren (Antrieb nur über Elektromotoren bzw. Elektrischen Maschinen, kurz E-Maschinen). Das Two-Drive-Transmission-Konzept besteht somit aus zwei mehrgängigen Teilgetrieben, die jeweils von einer E-Maschine angetrieben werden. Schaltvorgänge ohne Zugkraftunterbrechung können dadurch realisiert werden, dass während in einem der beiden Teilgetriebe der Gang gewechselt wird, das andere Teilgetriebe für den Vortrieb des Fahrzeugs sorgt. In derartigen Hybrid-Antriebssträngen mit jeweils einer E-Maschine vor und hinter dem Getriebe können zugkraftunterbrechungsfreie Schaltvorgänge mit relativ einfachen mechanischen Schaltmitteln (Klauenkupplungen oder Zahnkupplungen) realisiert werden, ohne Reibkupplungen und Synchronisierungen einsetzen zu müssen. Der Entfall von Reibkupplungen und Synchronisierungen bringt gleich mehrere Vorteile mit sich, da das Gewicht und die Kosten für diese Bauteile eingespart werden können und die durch die Reibvorgänge entstehenden Verluste entfallen. Das Getriebe wird somit leichter, effizienter und kostengünstiger. Jedoch dient der in DE 10 2011 117 853 A1 verwendete Verbrennungsmotor lediglich als Range-Extender, dessen Beitrag bei der Durchführung von Schaltvorgängen nicht näher dort beschrieben wird.

Im Allgemeinen stellt bei Antriebssystemen mit mehrgängigem/n Getriebe/n der Schaltkomfort ein wesentliches Bewertungskriterium dar; dies gilt insbesondere für automatisierte Getriebe in Fahrzeugen. Daher werden Auswirkungen des Schaltvorgangs auf die Fahrzeugbeschleunigung und auf die Akustik während der Getriebeentwicklung sorgfältig untersucht und beeinflusst, um dem Fahrer ein angenehmes Fahrgefühl zu ermöglichen. Negativ fällt einem Fahrer insbesondere eine Unterbrechung der Zugkraft und damit eine negative Fahrzeugbeschleunigung während des Schaltvorgangs auf. Um dies zu vermeiden, kommen in Planetenautomat-Getrieben und DoppelkupplungsGetrieben (siehe z.B. EP 1 610 038 A1) Reibkupplungen zum Einsatz, die eine Leistungsübertragung während eines Schaltvorgangs auch im schlupfenden Zustand ermöglichen. In den genannten Getriebekonzepten erfolgt der Schaltvorgang durch gleichzeitiges Öffnen einer ersten Reibkupplung (erstes Schaltmittel) und Schließen einer zweiten Reibkupplung (zweites Schaltmittel). Der Einsatz von Reibkupplungen macht diese Getriebeanordnung jedoch aufwendig und kostspielig.

EP 2 450 599 A2 offenbart ein Verfahren und eine Vorrichtung zur Steuerung eines Antriebsstrangs eines Kraftfahrzeugs, der einen Verbrennungsmotor mit einer Triebwelle, eine mit der Triebwelle des Verbrennungsmotors in Triebverbindung stehende elektrische Maschine, ein automatisiertes Schaltgetriebe mit einer Eingangswelle und mehreren selektiv schaltbaren Gangstufen, und eine zwischen der Triebwelle des Verbrennungsmotors und der Eingangswelle des Schaltgetriebes angeordnete automatisierte Reibungskupplung umfasst, wobei ein Gangwechsel des Schaltgetriebes in Verbindung mit einer geeigneten Ansteuerung des Verbrennungsmotors bei zumindest teilweise und/oder zeitweise geschlossener Reibungskupplung erfolgt, wobei die elektrische Maschine zur Beschleunigung des Schaltvorgangs und zur Abschwächung von Drehmoment- und Drehzahlspitzen während des Schaltvorgangs zeitweise als Generator und/oder als Motor betrieben wird.

CN 103 144 528 A offenbart ein Doppelkupplungsgetriebe, das bei einem Hybrid-Elektrofahrzeug eingesetzt wird, wobei es einen Motor/Generator, eine Doppelkupplung, ein Antriebszahnrad für den ersten Gang, ein Antriebszahnrad für den zweiten Gang, einen Motor, eine Motorkupplung, ein Motorenantriebszahnrad, ein erstes und zweites angetriebenes Zahnrad, einen Synchronisator, ein passives Hauptreduktionszahnrad und ein Differential sowie einen Kupplungsstarter für den ersten Gang, einen Kupplungsstarter für den zweiten Gang und einen Motorkupplungsstarter aufweist.

Aufgabe der vorliegenden Erfindung ist es, ein Verfahren und ein Antriebssystem der eingangs genannten Art so zu verbessern, dass die oben genannten Nachteile in vorteilhafter Weise überwunden werden. Insbesondere sollen ein Verfahren und ein Antriebssystem zur Verfügung gestellt werden, die effizient einen verbesserten Fahrkomfort einschließlich eines aus konventionellen Fahrzeugen gewohnten akustischen Eindrucks bewirken können. Diesbezüglich geht es insbesondere um einen Gangwechsel während einer verbrennungsmotorischen Fahrt und eher nicht während rein elektrischen Fahrten. Gemäß der vorliegenden Erfindung wird diese Aufgabe durch ein Verfahren nach Anspruch 1, und ein Antriebssystem nach Anspruch 8 gelöst.

Vorteilhafte Ausführungsformen der Erfindung ergeben sich aus den abhängigen Ansprüchen.

Demnach wird der erste Elektromotor während einer Zeitspanne zu Beginn des Schaltvorgangs, insbesondere vor dem Auslegen eines Ganges, zum Übergang in den Generator-Betrieb so gesteuert, dass er ein anwachsendes Lastmoment erzeugt. Damit erfolgt ein sanfter Einstieg in den Lastmodus. Und nach dem Einlegen eines neuen Ganges wird der Elektromotor zum Beenden des Generator-Betriebs so gesteuert, dass er ein abnehmendes Lastmoment erzeugt. In diesem Zusammenhang kann jedes vorteilhafte Ansteuerungsverhalten gewählt werden, mit dem der Generator- bzw. Lastmodus-Betrieb des Elektromotors möglichst optimal hoch- bzw. heruntergefahren wird. Insbesondere ungewollte, durch nicht-lineare Vorgänge (z.B. Hysterese-Effekte in den E-Maschinen) entstehende Verluste können hierdurch verhindert werden. Auch hinsichtlich des Verbrennungsmotors ergeben sich energetische Vorteile, da u.a. auch die zeitlich bedingten Verlusteffekte, welche bei einer anwachsenden Befeuerung des Motors auftreten würden, hierdurch minimiert werden können. Besonders hervorzuheben sind Vorteile hinsichtlich der Emissionen, die sich aus instationären Prozessen im Verbrennungsmotor ergeben. Denn das dynamische Auf- und Abbauen des Motormoments führt zu einem erhöhten Schadstoffausstoß; daher ist das erfindungsgemäß erzielte konstante Drehmomentniveau (Phlegmatisierungseffekt) von Vorteil.

Die vorliegende Erfindung verbessert deutlich das an sich bekannte Steuern eines Schaltvorganges hinaus, bei dem zwecks Auslegens eines Ganges des mehrgängigen Getriebes der erste Elektromotor während des Schaltvorgangs zumindest zeitweise mit dem aktiv betriebenen Verbrennungsmotor wirkverbunden und in einem Generator-Betrieb betrieben wird, wodurch der Verbrennungsmotor belastet und das erste mechanische Schaltmittel entlastet wird. Zum Schaltvorgang selbst ist zu sagen: Während des Schaltvorgangs, insbesondere beim Auslegen eines Ganges, wird in vorteilhafter Weise der Verbrennungsmotor weiterhin aktiv betrieben bzw befeuert; und der Elektromotor wird als Generator betrieben und mit dem Verbrennungsmotor wirkverbunden bzw. verkoppelt, um ihn zu belasten und somit das erste mechanische Schaltmittel zu entlasten (möglichst kein Torsionsmoment), was wiederum eine von Drehmomenten befreites Auslegen des Ganges ermöglicht, ohne den Verbrennungsmotor, z.B. durch Aussetzen der Befeuerung, in seiner Leistung herunterfahren zu müssen. Zur Umschaltung zwischen Motorbetrieb und Generatorbetrieb des Elektromotors ist folgendes zu sagen: Der jeweilige Elektromotor (E-Maschine) wird von einem Wechselrichter betrieben, der im 4-Quadranten-Betrieb arbeitet. Als Gleichspannungsquelle dient z.B. eine Hochvolt-Batterie. Im generatorischen Betrieb wird die elektrische Energie vom Wechselrichter in die Hochvolt-Batterie zurückgespeist. Alle Verbraucher, (E-Maschinen, 12V Bordnetz, elektrischer Kältemittelverdichter usw.) beziehen ihre Energie aus der Hochvolt-Batterie, wobei das Spannungsniveau für das 12V Bordnetz über einen DC/DC Wandler angepasst wird.

Mit der Bezeichnung "Elektromotor" ist jede elektrische Maschine (kurz E-Maschine) gemeint, die sowohl für den motorischen Betrieb wie auch den generatorischen Betrieb geeignet ist. Vorzugsweise werden permanent-erregte Synchronmaschinen verwendet.

In weiteren Anwendungen können auch zwei mehrgängige Getriebe vorgesehen sein, die jeweils als ein erstes Teilgetriebe und ein zweites Teilgetriebe in zusammenwirkender Weise in einer mehrstufigen Getriebeanordnung, insbesondere in einer Doppelkupplungs-Getriebeanordnung, betrieben werden. Dabei ist das erste Teilgetriebe während einer Zeitspanne des Schaltvorganges, insbesondere während einer Zeitspanne zur Synchronisation, von der Ausgangswelle abgekoppelt, aber der erste Elektromotor ist mit dem Verbrennungsmotor wirkverbunden. Somit kann der Elektromotor die Drehzahl des Verbrennungsmotors für das Einlegen des neuen Ganges synchronisieren.

Der genannte erste Elektromotor, welcher zeitweise als Generator betrieben wird, ist vorzugsweise eine permanent-erregte Synchronmaschine; es kann sich dabei aber auch um andere Motortypen handeln, wie z.B. Asynchronmaschinen, fremderregte Synchronmaschinen oder geschaltete Reluktanzmaschinen.

Durch die Erfindung ergeben sich unter anderem die folgenden Vorteile:
o Dadurch, dass der Verbrennungsmotor während des Schaltvorganges nicht heruntergefahren werden muss, sondern durchgehend betrieben bzw. befeuert werden kann, ergibt sich für die akustische Wahrnehmung des Fahrers eine deutliche Verbesserung, insbesondere bei reibkupplungslosen Getrieben; der Fahrer erhält einen vom Verbrennungsmotor erzeugten beständigen und angenehmen Klangeindruck, so wie dies eigentlich nur für Doppelkupplungsgetriebe oder Stufenautomatgetriebe typisch ist. Somit könnte man diesen Effekt der Erfindung z.B. auch mit dem Schlagwort "virtuelle Doppelkupplung" bezeichnen.
o Durch die während des Schaltvorganges quasi unterbrechungsfreie Zugkraft- bzw. Drehmomenten-Übertragung wird des Weiteren eine nahezu konstante Fahrzeugbeschleunigung erreicht.
o Außerdem kann der Verbrennungsmotor fortlaufend in einem günstigen Arbeitsbereich mit möglichst konstanter Drehmomentenabgabe betrieben werden. Insbesondere braucht die Drehzahl weder stark abgesenkt und noch angehoben zu werden. Hierdurch ergeben sich auch ökonomische und ökologische Vorteile hinsichtlich des Verbrauchs, des Wirkungsgrades der Verbrennung sowie der Reduktion von Schadstoffausstoß bzw. Abgaserzeugung.
∘ Ferner kann ganz auf Reibkupplungen und ähnliche Bauteile verzichtet werden, so dass das erfindungsgemäße Antriebssystem kostengünstig und effizient, mittels formschlüssiger Schaltmittel, realisiert werden kann.

Durch die Merkmale der abhängigen Ansprüche ergeben sich zusätzliche vorteilhafte Ausführungsformen:
Vorzugsweise ist das mindestens eine mechanische Schaltmittel als Schaltmuffe mit Kupplungskörper, als Schaltkupplung oder als formschlüssige Kupplung, insbesondere Klauenkupplung. ausgebildet. In diesem Zusammenhang können kostengünstige und effektive Konstruktionen, wie z.B. Klauenkupplungen oder Zahnkupplungen etc. eingesetzt werden. Nichtsdestotrotz können als mechanische Schaltmittel jede Arten von Bauelementen oder Komponenten verwendet werden, mittels denen eine Kraft- bzw. Drehmomenten-Übertragung über eine formschlüssig herstellbare und wieder lösbare Verbindung (Kupplung, Kopplung usw.) erzielt werden kann.

Vorzugsweise wird der Verbrennungsmotor fortlaufend aktiv betrieben bzw. befeuert, zumindest aber während einer Zeitspanne des Schaltvorganges, in welcher der erste Elektromotor im Generator-Betrieb (Lastmodus) betrieben wird. Dabei wird der Verbrennungsmotor so aktiv betrieben, dass er ein möglichst konstantes oder allenfalls nur geringfügig reduziertes Drehmoment erzeugt. Ein geringfügig reduziertes Drehmoment wird z.B. dann erzeugt, wenn von dem ersten Elektromotor im Generator-Betrieb nur eine begrenzte Last zur Verfügung gestellt werden kann. Das von dem generatorisch betriebenen Elektromotor erzeugte Lastmoment und das vom Verbrennungsmotor kommende Drehmoment gleichen sich beim Auslegen des Ganges möglichst aus, so dass das Schaltmittel (Schaltmuffe, Klauenkupplung...) lastfrei gelöst werden kann. Das genannte Szenario bezieht sich also auf den Fall, dass der Elektromotor im Generator-Betrieb das Drehmoment des Verbrennungsmotors nicht komplett kompensieren kann und folglich der Verbrennungsmotor partiell gedrosselt werden muss.

Je nach Anwendungsfall kann es vorteilhaft sein, wenn der erste Elektromotor im Generator-Betrieb auch zur elektrischen Energie-Erzeugung genutzt wird, wobei die erzeugte Energie gespeichert oder zur Versorgung eines elektrischen Verbrauchers, insbesondere eines weiteren Elektromotors, verwendet wird. Durch diese Benutzung ergeben sich direkte ökologische Vorteile, da in diesem Zusammenhang die nicht genutzte, jedoch schon erzeugte, mechanische Arbeit zum großen Teil in elektrische Energie umgewandelt werden kann. Zusätzlich kann der Elektromotor auch nach dem Schaltvorgang im Generator-Betrieb weiter betrieben werden, um beispielsweise als eine zusätzliche Lichtmaschine (z.B. 48 Volt) betrieben zu werden oder eine Batterie aufzuladen.

Vorzugsweise wird der erste Elektromotor während des Generator-Betriebs so gesteuert, dass ein entsprechendes Kompensationsmoment (an dem bzw. den Schaltmitteln) beibehalten wird. In diesem Zusammenhang sorgt der Elektromotor dafür, dass das zu schaltende mechanische Schaltmittel frei von Drehmomenten ist, in dem ein Kompensationsmoment, d.h. eine Last, zur Verfügung gestellt wird, die dem Drehmoment des Verbrennungsmotors entgegenwirkt. Somit wirkt der generatorisch betriebene Elektromotor wie eine (temporäre) Bremse für den Verbrennungsmotor und es ergibt sich aufgrund des Kräftesuperpositionsprinzips ein Gesamtdrehmoment nahe Null, d.h. das Schaltmittel bzw. die Schaltmuffe wird von Torsionskräften befreit.

Das oben beschriebene Antriebssystem, welches ggf. nur ein mehrgängiges Getriebe aufweist, kann bereits für P2-Hybrid-Antriebe von Nutzen sein. Dabei handelt es sich um eine Hybridtopologie, bei welcher die E-Maschine (Traktionsmaschine) zwischen Verbrennungsmotor und Getriebeeingang positioniert ist und sich durch eine Kupplung vom Verbrennungsmotor trennen lässt, um rein elektrisch fahren zu können. Durch die vorliegende Erfindung kann ein Herunter- und Herauffahren des Verbrennungsmotors während des Schaltvorganges vermieden werden, was wiederum eine ökonomisch und ökologisch günstige Betriebsweise des Verbrennungsmotors ermöglicht. Dies ist insbesondere für den Einsatz im NKW-Bereich von Vorteil.

In weiteren Ausführungen kann das Antriebssystem des Weiteren auch ein zweites mehrgängiges Getriebe aufweisen, so dass ein kombinierter P2-P3-Hybrid-Antrieb mit zwei Teilgetrieben ausgebildet werden kann. Folglich weist das zweite mehrgängiges Getriebe /Teilgetriebe eine zweite Eingangswelle und ein zweites mechanisches Schaltmittel auf, wobei von einem zweiten Elektromotor über die zweite Eingangswelle kommende Drehmomente auf die Ausgangswelle des Antriebssystems übertragen werden können. In der aus den beiden Teilgetrieben bestehenden Getriebeanordnung kann der zweite Elektromotor bei Bedarf zusammen mit dem ersten Elektromotor und/oder dem Verbrennungsmotor (des ersten Teilgetriebes) betrieben werden; alternativ dazu kann auch der zweite Elektromotor separat betrieben werden. Durch diese Anordnung kann ein komplettes mehrteiliges Getriebe realisiert werden, das sich mit Hilfe des beschriebenen Verfahrens gegenüber dem Fahrer bezüglich der akustischen und haptischen Eindrücke wie ein Antrieb mit Doppelkupplung verhält und daher als "virtuelle Doppelkupplung" verstanden werden kann. Denn üblicherweise erfolgt in Stufenautomatikgetrieben (mit Planetenradsätzen) oder in Doppelkupplungsgetrieben bei Lastschaltung eine Momenten-Überblendung durch graduelles Öffnen und Schließen der jeweiligen Reibkupplung (Halbkupplung). In der vorliegenden Erfindung wird ein Momenten-Überblendung mit Hilfe des mindestens einen Elektromotors imitiert.

In einer bevorzugten Ausführung sind die mehrgängigen Getriebe jeweils als ein erstes Teilgetriebe und ein zweites Teilgetriebe in zusammenwirkender Weise in einer mehrstufigen Getriebeanordnung, insbesondere in einer Doppelkupplungs-Getriebeanordnung, ausgebildet. Dabei wird der Schaltvorgang so gesteuert, dass das erste Teilgetriebe während einer Zeitspanne des Schaltvorganges, insbesondere während einer Zeitspanne zur Synchronisation, von der Ausgangswelle abgekoppelt wird.

Bei dem Schaltvorgang kann auch zumindest während einer Zeitspanne (insbesondere wenn der erste Elektromotor sich im Generator betrieb befindet) mit Hilfe des zweiten Elektromotors und des zweiten Teilgetriebes ein das Antriebssystem aufweisendes Fahrzeug weiter angetrieben, insbesondere beschleunigt, werden während das erste Teilgetriebe von der Ausgangswelle des Antriebsystems entkoppelt ist. Hierdurch wird eine Zugkraftüberbrückung bzw. Zugkraftunterstützung erzielt.

Vorzugsweise weist das Antriebssystem mindestens einen dritten Elektromotor auf, der seriell mit einem der anderen Motoren, insbesondere mit dem ersten Elektromotor, verbunden ist.

### KURZE BESCHREIBUNG DER ABBILDUNGEN

Die nachfolgenden Abbildungen zeigen Ausführungsformen der vorliegenden Erfindung:
- Fig. 1: zeigt das Schaltbild des Antriebssystems gemäß einer ersten Ausführungsform, die insbesondere als P2-Hybrid-Antrieb realisiert werden kann.
- Fig. 2: zeigt das Schaltbild des Antriebssystems mit zwei Teilgetrieben gemäß einer zweiten Ausführungsform, die insbesondere als P2-P3-Hybrid-Antrieb realisiert werden kann.
- Fig. 3: veranschaulicht den zusätzlichen Einsatz von weiteren Elektromotoren in dem Antriebssystem nach Fig. 2.
- Fig. 4: zeigt zur Veranschaulichung des erfindungsgemäßen Steuerungs-Verfahrens einen Graphen mit den zeitlichen Verläufen von Momenten und Drehzahlen, die während Schaltvorganges in dem Antriebssystem auftreten.
- Fig. 5: zeigt zu der Fig. 4 passend das Ablaufdiagram des Verfahrens zum Steuern eines Schaltvorganges in dem erfindungsgemäßen Antriebssystem.

### DETAILLIERTE BESCHREIBUNG DER AUSFÜHRUNGSFORMEN

In der nachfolgenden Beschreibung wird die Erfindung anhand von bevorzugten Ausführungsformen beschrieben. Diese Ausführungsformen dienen lediglich dem Verständnis und sind nicht als Einschränkungen der Erfindung zu verstehen. Insbesondere können auch verschiedene Ausführungsform oder Teile davon im Sinne der Erfindung miteinander kombiniert werden, wobei die Erfindung durch die nachfolgenden Ansprüche bestimmt wird.

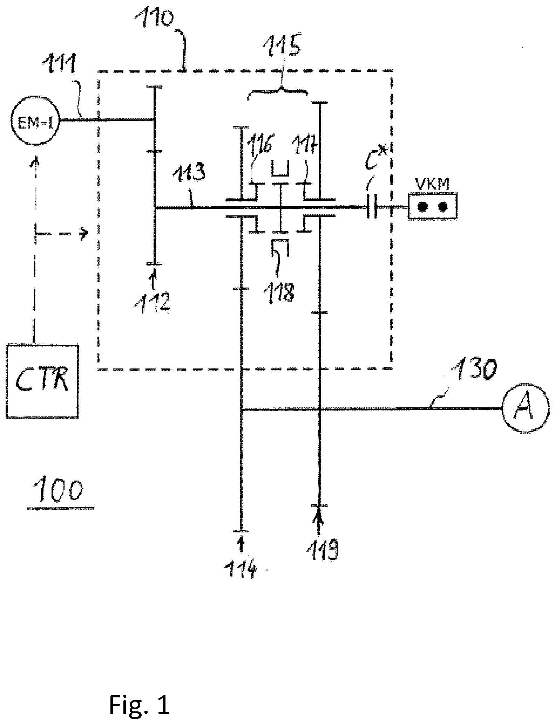

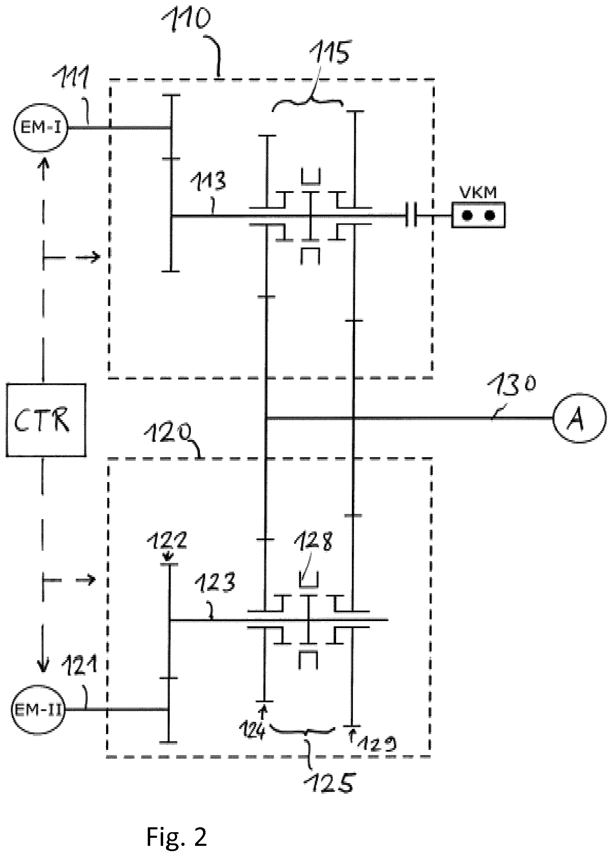

Die nachfolgend noch im Detail näher beschriebene Erfindung lässt sich, wie bereits oben erwähnt, vorzugsweise für P2- oder P2-P3-Hybridantriebe einsetzen. Wenn hier von einem P2-Hybridantrieb die Rede ist, dann ist damit eine Konstruktion gemeint, wie sie in der Fig. 1 dargestellt ist. Das heißt, dass eine Konstruktion gemeint ist, bei der der Elektromotor EM-I (E-Maschine) sich in Bezug auf den Momentenfluss zwischen der Kupplung C* (häufig auch C0 oder K0 genannt) und dem Getriebe 110 befindet, sich also eingangsseitig in Bezug auf das Getriebe befindet. Im Unterschied dazu enthält die Konstruktion nach Fig. 2 noch einen weiteren Elektromotor EM-II 1, welcher sein Drehmoment hinter dem Getriebe 110 des Verbrennungsmotors VKM einbringen kann. Daher entspricht die Einbausituation von EM-II der eines P3-Antriebs. Zusammen mit EM-I bildet die in Fig. 2 dargestellte Getriebeanordnung einen P2-P3-Hybridantrieb aus. Die Figuren werden nun nachfolgend im Detail beschrieben:
In Fig. 1 wird eine erste bevorzugte Ausführungsform der vorliegenden Erfindung dargestellt. Das Antriebssystem 100 soll insbesondere für P2-Hybrid-Antriebe geeignet sein und umfasst dafür ein erstes mehrgängiges Getriebe 110 mit einer ersten Eingangswelle 111 und einem ersten mechanischen Schaltmittel 115, welches dazu dient, die von der ersten Eingangswelle 111 kommenden Drehmomente auf eine Ausgangswelle 130 des Antriebssystems 100 zu übertragen. Die Drehmomente selbst werden von einem Verbrennungsmotor VKM und/oder mindestens einem ersten Elektromotor EM-I erzeugt. Der erste Elektromotor EM-I ist während des Schaltvorgangs zumindest zeitweise mit dem aktiv betriebenen Verbrennungsmotor VKM wirkverbunden, wobei der erste Elektromotor EM-I zwecks Auslegens eines Ganges des mehrgängigen Getriebes 110 zumindest kurzzeitig im Generator-Betrieb betrieben wird, so dass der erste Elektromotor EM-I den Verbrennungsmotor VKM belastet und das erste mechanische Schaltmittel 115 entlastet. Das mechanische Schaltmittel, das insbesondere eine Schaltmuffe 115 oder eine formschlüssige Kupplung ist, kann dann lastfrei getrennt bzw. geöffnet werden. Der Schaltvorgang wird mittels einer Steuerungs-Vorrichtung CTR, die auf den Elektromotor EM-I und das Getriebe 110 einwirkt, gesteuert und/oder koordiniert.

In diesem Zusammenhang ist anzumerken, dass bei der vorliegenden Erfindung ganz auf Reibkupplungen verzichtet werden kann, was mit einer Senkung der Produktionskosten und einer zusätzlichen Senkung des Gewichts einhergeht. Des Weiteren wird hierdurch der Abrieb minimiert und damit die Lebensdauer des Getriebes gesteigert. Außerdem ergeben sich durch den Verzicht auf reibschlüssige Elemente energetische Vorteile, da weniger Energie durch Reibverluste verloren geht. Es ist zu erwähnen, dass der Verbrennungsmotor VKM entweder, wie in der Fig. 1 dargestellt, über die Zwischenwelle 113 und die Zahnradpaarung 112 mit dem Elektromotor EM-I verbunden sein kann oder aber auch direkt mit der Eingangswelle 111 verbunden sein kann. Je nachdem in welchen Drehzahlbereichen der Verbrennungsmotor VKM und der Elektromotor EM-I überwiegend betrieben werden, bietet sich eine direkte Kopplung zwischen VKM und EM-I über die Eingangswelle 111 oder eine übersetze Ankopplung über die Zwischenwelle 113 und Zahnradpaarung 112 an. Durch die Auslegung der Zahnradpaarung 112 kann die Übersetzung optimal angepasst werden. Bei dem vorliegenden Antriebssystem gemäß Fig. 1 kann es sich insbesondere um ein P2-Hybrid-System handeln.

In Fig. 2 wird eine weitere Ausführungsform der vorliegenden Erfindung dargestellt, die sich insbesondere auf P2-P3-Hybrid-Systeme bezieht. In dieser Ausführungsform umfasst das Antriebssystem 100 nicht nur ein erstes mehrgängiges Getriebe 110, sondern noch mindestens ein zweites mehrgängiges Getriebe 120, das ebenfalls eine Eingangswelle 121 und ein mechanisches Schaltmittel 125 (hier Schaltmuffe) aufweist. Damit können auch die von der zweiten Eingangswelle 121 kommenden Drehmomente auf die Ausgangswelle 130 des Antriebssystems übertragen werden. Dazu kann der zweite Elektromotor EM-II zumindest teil- und/oder zeitweise die gewünschten Drehmomente erzeugen. Die beiden mehrgängigen Getriebe haben die Funktion zweier Teilgetriebe 110 und 120 in einer Getriebe-Anordnung, die ähnlich einem Doppelkupplungsgetriebe aufgebaut ist, wobei hier auf Reibkupplungen ganz verzichtet werden kann.

Die Steuerungs-Vorrichtung CTR kann nicht nur das erste Teilgetriebe 110 mit EM-I steuern, sondern auch das zweite Teilgetriebe 120 und insbesondere den zweiten Elektromotor EM-II. Hierdurch können bedarfsweise der zweite Elektromotor EM-II sowie der erste Elektromotor EM-I zusammen mit dem Verbrennungsmotor VKM und/oder alternativ dazu betrieben werden.

Mit diesem in Fig. 2 dargestellten Aufbau kann ein zugkraftunterbrechungsfreier Schaltvorgang ohne Reibkupplungen realisiert werden. Hingegen ist bekannt, dass insbesondere im Premium-Segment automatisierte Getriebe mit mindestens zwei Reibkupplungen etabliert sind, wie z.B. Doppelkupplungsgetriebe (DKG) oder Stufenautomatgetriebe (AT). Im Gegensatz dazu kann jedoch in der vorliegenden Erfindung ohne Einsatz von Reibkupplungen geschaltet werden. Bei der vorliegenden, in Fig. 2 gezeigten Ausführungsform kann es sich um einen P2-P3-Hybrid handeln, wie zum Beispiel einem Two-Drive-Transmission-System, das erfindungsgemäß verbessert wurde. Mit Hilfe der vorliegenden Erfindung können Schaltvorgänge in derartigen Antriebssträngen kosten- und materialeffizient die gleichen Komfortanforderungen erfüllen, wie dies in konventionellen Antriebssystemen sonst nur mit einem Planetenstufenautomat oder Doppelkupplungsgetriebe erreichbar wäre. Das erfindungsgemäße Verfahren zur Steuerung der Schaltvorgänge wird nachfolgend noch im Detail beschrieben.

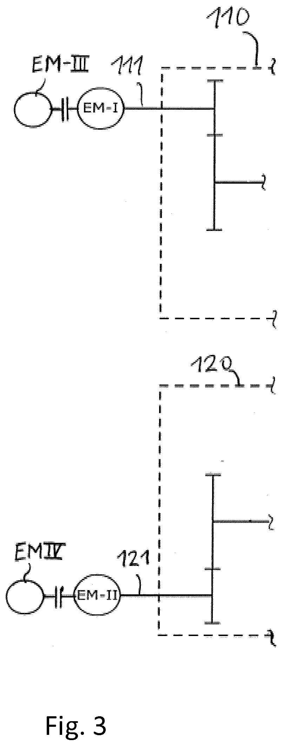

Zuvor sei noch auf die Fig. 3 Bezug genommen und erwähnt, dass in einer weiteren bevorzugten Ausführungsform der vorliegenden Erfindung das Antriebssystem auch noch mindestens einen dritten Elektromotor EM-III aufweist, der seriell mit einem der anderen Motoren, insbesondere mit dem ersten Elektromotor EM-I, verbunden ist. Ebenso kann optional noch ein vierter Elektromotor EM-IV direkt an den zweiten Elektromotor EM-II angekoppelt sein. Auch kann ggf. nur ein Zusatzmotor, z.B. EM-III, vorgesehen sein, der je nach Bedarf den EM-I oder den EM-II unterstützt. Mit diesem Konstruktionsprinzip kann auf Seiten der Elektromotoren mit kleiner dimensionierten Maschinen gearbeitet werden, die bedarfsweis flexibel miteinander verkoppelt werden können.

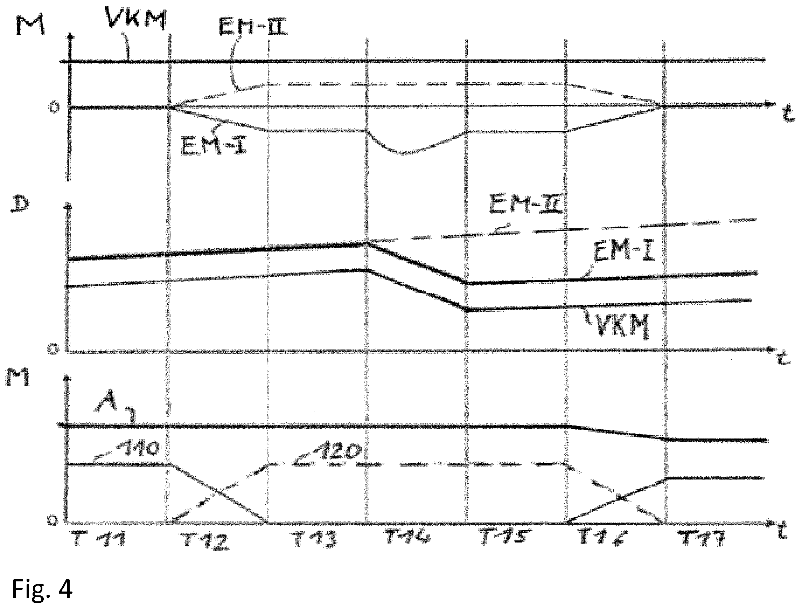

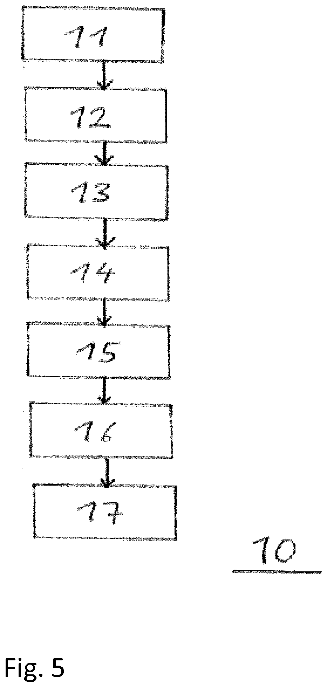

Anhand der Fig. 4 und 5 wird nun das erfindungsgemäße Verfahren 10 zur Steuerung des jeweiligen Schaltvorganges in den hier offenbarten Antriebssystemen (Fig. 1-3) näher beschrieben:
Die Fig. 4 veranschaulicht den Schaltvorgang anhand der zeitlichen Verläufe bestimmter Kenngrößen, wie Moment M und Drehzahl D, wobei der Schaltvorgang in mehrere Phasen bzw. Intervallen T11 bis T17 unterteilt ist, die beispielsweise jeweils 200ms umfassen. Korrespondierend dazu zeigt die Fig. 5 das Ablaufdiagramm für das Verfahren 10 mit seinen einzelnen Verfahrensschritten 11 bis 17. Beide Figuren 4 und 5 werden nachfolgend erläutert, wobei auch auf die Figuren 1-3 Bezug genommen wird:
Zu Beginn des Verfahrens 10 befindet sich der Antrieb im Ausgangszustand, der anhand der Phase T11 und dem Verfahrensschritt 11 veranschaulicht wird. Der Verbrennungsmotor VKM arbeitet bzw. wird aktiv befeuert und liefert ein bestimmtes Drehmoment (oberer Verlauf in Fig. 4). Bezüglich der Elektromotoren EM-I und EM-II ist zu sagen, dass letzterer nur im Bespiel nach den Fig. 2 und 3 zum Einsatz kommt. Der Momentenverlauf für EM-II ist daher gestrichelt gezeichnet (s. Fig. 4). Zu Beginn in der Phase T11 liefern beide Elektromotoren EM-I und EM-II noch keine Drehmomente M. Was die Drehzahlen D angeht, so steigt die Drehzahl des VKM leicht an; die beiden mitlaufenden Elektromotoren EM-I und EM-II arbeiten mit einer etwas höheren Drehzahl D wie der VKM. Die EM-I und EM-II sowie der VKM hätten nur dann dieselbe Drehzahl, wenn die Übersetzung zwischen den Wellen 111 und 113 sowie zwischen den Wellen 121 und 123 genau Eins beträgt und in beiden Teilgetrieben ein Gang mit der gleichen Übersetzung eingelegt ist. In dem nach Fig. 4 dargestellten Beispiel weist VKM ein etwas geringeres Drehzahlniveau als die Elektromotoren auf. Allgemein kann aber gesagt werden, dass die Drehzahl aller Antriebsaggregate (EM-I, EM-II und VKM) proportional mit der Fahrgeschwindigkeit und entsprechend der Übersetzung ansteigt.

Im nächsten Schritt 12 soll zwecks Auslegens eines Ganges das mechanische Schaltelement, d.h. die Schaltmuffe 118 im (Teil-) Getriebe 110 möglichst lastfrei gestellt werden. Ausgehend davon, dass der EM-I mit dem VKM wirkverbunden ist (Kupplung C* geschlossen; s. Fig. 1) wird in der Phase T12 der EM-I in den Generatorbetrieb gebracht. Dabei soll der EM-I ein negatives Drehmoment aufbauen (s. Fig. 4), welches das vom VKM kommende Drehmoment kompensiert, so dass die Schaltmuffe 118 lastfrei wird und einfach getrennt werden kann. Gleichzeitig erhöht der EM-II sein Drehmoment, so dass eine Momentenübergabe von dem ersten Teilgetriebe 110 auf das zweite Teilgetriebe 120 innerhalb der Phase T12 erfolgen kann. Dies ist in Fig. 4 in dem unteren Momentverlauf dargestellt, der sich auf das resultierende Antriebsmoment A (Ausgangsmoment an der Ausgangswelle 130) bezieht.

Im nächsten Schritt 13 bzw. in der Phase T13 wird der aktuelle Gang ausgelegt; der jeweilige Elektromotor EM-I oder EM-II liefert das negative bzw. positive Drehmoment. Somit wirkt EM-I weiterhin kompensierend zum VKM, der fortlaufend mit (nahezu) konstantem Drehmoment betrieben werden kann (s. oberen Verlauf in Fig. 4). Im nachfolgenden Schritt 14 bzw. in der Phase T14 erfolgt die Synchronisation des Getriebes auf den neuen Gang. Dazu wird der Elektromotor EM-I drehzahlgeregelt betrieben, so dass eine definierte Differenzdrehzahl zwischen Schaltmuffe und Kupplungskörper erreicht wird.; der EM-II bleibt im Motorbetrieb und liefert weiterhin sein Drehmoment auf dem aktuellen Niveau. Während der Synchronisation (T14) fällt die Drehzahl des VKM etwas ab und gleichermaßen auch die Drehzahl des damit verkoppelten EM-I. Die Drehzahl des EM-II steigt weiter an, da das Fahrzeug aufgrund der Zugkraftüberbrückung weiter beschleunigt werden kann.

Nach erfolgter Synchronisation kann dann im Schritt 15 bzw. in der Phase T15 der neue Gang eingelegt werden. Anschließend folgt im Schritt 16 bzw. in der Phase T16 eine Drehmomentenübergabe vom Teilgetriebe 120 zurück an das Teilgetriebe 110. Schließlich wird der Schaltvorgang mit dem Schritt 17 bzw. in der Phase T17 abgeschlossen. Im dargestellten Beispiel nach Fig. 4 sinkt das das Moment A am Getriebeausgang zum Schluss hin etwas ab, weil das Moment des Teilgetriebes 110 nach dem Schaltvorgang etwas geringeres Niveau hat als am Anfang. Die dargestellten Verläufe sind aber nur exemplarisch zu verstehen.

Wie anhand der Fig. 4 zu sehen ist, kann der VKM über den gesamten Schaltvorgang hinweg und insbesondere während der Phasen T12 und T13 für das Auslegen des aktuellen Gang mit einem konstanten Drehmoment aktiv betrieben werden. Demnach braucht der VKM nicht heruntergefahren zu werden, etwa durch Reduktion der Einspritzmenge oder Drosselklappenstellung, Einstellen der Befeuerung etc.. Für den Antrieb hat des insbesondere den Vorteil, dass der VKM konstant in einem effizienten Arbeitsbereich betrieben werden kann und insbesondere die Verbrennung optimal und die Schadstofferzeugung gering gehalten werden können. Das Schalten erfolgt unterbrechungsfrei und für den Fahrer sehr angenehm in der Wahrnehmung, auch was den akustischen Eindruck angeht, denn der Antrieb verhält sich für den Fahrer wie ein Antrieb mit "virtueller Doppelkupplung".

Die Ansteuerung des/der Getriebe und Motoren wird von der Steuerungs-Vorrichtung CTR (s. Fig. 1 und 2) durchgeführt, wobei die Steuerung gemäß dem Verfahren 10 den Verbrennungsmotor VKM überwacht, damit er fortlaufend aktiv betrieben bzw. befeuert wird, und den ersten Elektromotor EM-I im Generator-Betrieb ansteuert, damit dieser ein Kompensationsmoment an dem Schaltmittel (hier Schaltmuffe 118) erzeugt, so dass dies lastfrei getrennt werden kann. Für den Fall, dass der Elektromotor EM-I kein ausreichend großes Kompensationsmoment erzeugen kann, kann der Verbrennungsmotor VKM auch so angesteuert werden, dass er zeitweise, insbesondere in Phase T12, sein Drehmoment etwas verringert, so dass das schwächere Kompensationsmoment ausreicht, das Schaltmittel lastfrei zu machen.

Außerdem kann der Elektromotor EM-I auch im Generator-Betrieb angesteuert und mit elektrischen Verbrauchern verbunden werden, um für diese elektrische Energie zu erzeugen. Somit können andere Elektromotoren betrieben werden oder die EM-I wird als Lichtmaschine genutzt oder die gewonnene elektrische Energie kann zum Beispiel in einer Batterie gespeichert werden.

Wie bereits anhand der Fig. 4 beschrieben wurde, steuert die Steuerungs-Vorrichtung CTR den ersten Elektromotor EM-I während einer Zeitspanne T12 des Schaltvorgangs zum Übergang in den Generator-Betrieb so an, dass der Elektromotor EM-I ein anwachsendes Lastmoment erzeugt. Und während einer Zeitspanne T16 des Schaltvorgangs nach dem Einlegen eines Ganges des mehrgängigen Getriebes kann der Generator-Betrieb dadurch beendet werden, dass der Elektromotor EM-I ein abnehmendes Lastmoment erzeugt. Die Steuerung erfolgt hier nach den Erfordernissen des ersten Elektromotors EM-I und ist u.a. abhängig von dessen Bauart. Verschiedene Kurven für die Dynamik im Generatorbetrieb (s. insbesondere T12 und T16 in Fig. 4) sind möglich und können für den jeweils eingesetzten Elektromotor optimiert werden. Auch kann damit dem Verbrennungsmotor möglichst schnell und effektiv die benötigte Last zur Verfügung gestellt werden, so dass die Gesamtzeitdauer des Schaltvorganges minimiert wird. In dieser Beziehung sollten auch nicht-lineare Effekte bei der Inbetriebnahme des Elektromotors EM-I berücksichtigt werden.

Wie auch anhand der Fig. 4 zu sehen ist, kann die Steuerungs-Vorrichtung CTR den ersten Elektromotor EM-I während des gesamten Schaltvorganges so steuern, dass insbesondere für das Auslegen und Einlegen von Gängen (Phasen T13 und T15) ein entsprechendes Kompensationsmoment beibehalten wird. In diesem Zusammenhang wird sichergestellt, dass der Elektromotor EM-I das Drehmoment des Verbrennungsmotors VKM während des gesamten Schaltvorganges ausgleicht, so dass das Schaltmittel Drehmomenten-frei ist.

In Fig. 4 wird der zeitliche Verlauf der einzelnen Verfahrensschritte einer Ausführungsform der vorliegenden Erfindung dargestellt, der mindestens zwei Elektromotoren vorliegen. Der gesamte Schaltvorgang ist hierbei in sieben Phasen bzw. Intervalle unterteilt, wobei die Phasen über eine jeweilige Zeitdauer T11-T17, hinweg reichen. Die erste Zeitdauer T11 umfasst die Vorphase bzw. Ausgangssituation des Schaltvorgangs, in der zum Beispiel über Sensoren in der Fahrerkabine detektiert werden kann, dass ein Schaltvorgang bevorsteht und die Steuerungs-Vorrichtung CTR dementsprechende Vorbereitung trifft. Die Anforderung für einen Gangwechsel kann vom Fahrer selbst oder von der Betriebsstrategie ohne eine Einwirken des Fahrers kommen. Die zweite Zeitdauer T12 umfasst den Beginn des Schaltvorgangs, indem der erste Elektromotor EM-I in den Generator-Betrieb eintritt und gleichzeitig der zweite Elektromotor EM-II ein wachsendes Drehmoment erzeugt, um den Antrieb zu übernehmen (Drehmomentenübergabe vom Teilgetriebe 120 auf das Teilgetriebe 119). Die dritte Zeitdauer T13 umfasst den Vorgang des Gangauslegens, wobei während dieser Zeit das mechanische Schaltmittel (z.B. Klauenkupplung) von Drehmomenten frei ist, weil der generatorisch betriebene Elektromotor EM-I kompensierend auf den weiterhin befeuerten Verbrennungsmotors wirkt.

Die vierte Zeitdauer T14 umfasst das Synchronisieren des Verbrennungsmotors auf die Anforderungen des einzulegenden Ganges, wobei diese Synchronisation im Wesentlichen durch die Ansteuerung des ersten Elektromotors EM-I erreicht wird. Die fünfte Zeitdauer T15 umfasst das Einlegen des neuen Gangs, wobei auch während dieser Zeitdauer das mechanische Schaltmittel torsionsfrei ist. Die sechste Zeitdauer T16 umfasst das Herunterfahren des ersten Elektromotors EM-I aus dem Generator-Betrieb und das gleichzeitige Herunterfahren des Betriebes des zweiten Elektromotors EM-II auf das gewünschte Level, hier auf Null. Die siebte Zeitdauer T17 bezeichnet das Ende des Schaltvorgangs.

Mit anderen Worten, wird in den Verfahrensschritten 12 und 13 das Antriebsmoment vom ersten Schaltmittel 115 an das zweite Schaltmittel 125 übergeben, wobei der Verbrennungsmotor VKM weiterhin Drehmoment abgibt. Das Drehmoment an der Ausgangswelle 130 und damit die Fahrzeugbeschleunigung bleiben daher konstant. Anschließend wird in Verfahrensschritt 14 die Gesamtdrehzahl an dem ersten Schaltmittel 115 ausgeglichen, indem der erste Elektromotor EM-I eine Last zur Verfügung stellt, was dem Reduzieren der Drehzahl des Verbrennungsmotors VKM im herkömmlichen Verfahren entspricht. Idealerweise wird auch in dieser Phase die Fahrzeugbeschleunigung konstant bleiben, weil mit dem nicht zuschaltenden Teilgetriebe das Fahrzeug weiter angetrieben werden kann. Hierbei erfolgt also die Übergabe des Drehmoments nicht durch das Überblenden der Kupplungen, sondern durch die Reduktion des Gesamt-Drehmoments an dem ersten Schaltmittel 115 und gleichzeitiges Steigern des Drehmoments der E-Maschine EM-II. Das Drehmoment am Getriebeausgang bleibt dadurch konstant. Nach der Übergabe des Drehmoments wird der Gang im zweiten Teilgetriebe 120 (s. Fig. 2) ausgelegt. Anschließend wird die Drehzahl des Verbrennungsmotors durch Regelung ersten Elektromotors EM-I auf die Zieldrehzahl synchronisiert. Wenn die Drehzahl eingeregelt ist, kann der neue Gang eingelegt werden und das Drehmoment kann wieder vom zweiten Elektromotor EM-II zum Verbrennungsmotor VKM zurückgeblendet werden.

In Fig. 5 wird der Ablauf der einzelnen Verfahrensschritte einer Ausführungsform der vorliegenden Erfindung schematisch dargestellt.

Die dynamischen und akustischen Eigenschaften von Schaltvorgängen sind ein wesentliches Komfortmerkmal für Fahrzeugantriebsstränge. Ein Fahrer nimmt insbesondere den Beschleunigungsverlauf des Fahrzeugs und das Geräusch des Verbrennungsmotors während eines Schaltvorgangs wahr. Durch das Anwenden des Verfahrens ergeben sich für die Wahrnehmung des Fahrers eine nahezu konstante Fahrzeugbeschleunigung und eine gleichbleibende Akustik. Auch können solche Schaltvorgänge, bei denen es zu einer Unterbrechung der Zugkraft und damit zu einem plötzlichen Einbruch der Fahrzeugbeschleunigung kommt und die als unkomfortabel wahrgenommen werden, durch die vorliegende Erfindung vermieden werden.

Durch das erfindungsgemäße Verfahren können kombinierte P2-P3-Hybridantriebsstränge mit Mehrganggetrieben ohne Reibkupplungen in einer Weise geschaltet werden, dass das dynamische und insbesondere das akustische Verhalten von Schaltungen in Doppelkupplungsgetrieben oder Stufenautomatgetrieben erreicht wird. Bei P2-Hybridantriebssträngen kann durch das erfindungsgemäße Verfahren eine Reduktion des Schadstoffausstoßes während der Schaltvorgänge erreicht werden. Im Falle eines P2-P3-Hybridantriebsstrangs wird das Fahrzeug während des Schaltvorgangs von der zweiten E-Maschine, die am Ausgang des Teilgetriebes des VM angreift, angetrieben. Dadurch gibt es keine Unterbrechung der Zugkraft.

Zusammenfassend werden mit der vorliegenden Erfindung ein Antriebssystem 100, eine Steuerungs-Vorrichtung CTR, und ein Verfahren 10 zum Steuern eines mechanischen Schaltvorganges in dem Antriebssystem 100 zur Verfügung gestellt, wobei das Antriebssystem mindestens ein erstes mehrgängiges Getriebe 110 mit einer ersten Eingangswelle 111 und einem ersten mechanischen Schaltmittel 115 aufweist, wobei von der ersten Eingangswelle 111 kommende Drehmomente auf eine Ausgangswelle 130 des Antriebssystems 100 übertragen werden, und wobei die Drehmomente von einem Verbrennungsmotor VKM und/oder mindestens einem ersten Elektromotor EM-I erzeugt werden. Es wird nun der erste Elektromotor EM-I während des Schaltvorgangs zumindest zeitweise T12, T13 zwecks Auslegens eines Ganges des mehrgängiges Getriebes 110 mit dem Verbrennungsmotor VKM wirkverbunden und in einem Generator-Betrieb betrieben Schritte 12, 13, wodurch der Verbrennungsmotor VKM belastet und das erste mechanische Schaltmittel 115 entlastet werden. Das mechanische Schaltmittel 115, welches z.B. eine Schaltmuffe, eine Schaltkupplung oder eine formschlüssige Kupplung sein kann, wird somit lastfrei bzw. torsionsfrei und kann einfach getrennt/geöffnet werden. Der Verbrennungsmotor VKM kann während des gesamten Schaltvorganges T11-T17 fortlaufend aktiv betrieben, insbesondere befeuert, werden Schritte 11-17, zumindest aber während einer Zeitspanne T12-T16 des Schaltvorganges, in welcher der erste Elektromotor EM-I im Generator-Betrieb betrieben wird. Dadurch erhält der Fahrer den akustischen und haptischen Eindruck eines Antriebs mit "virtueller Doppelkupplung".

### Bezugszeichenliste

- 10: Verfahren zum Steuern eines Schaltvorganges

- 11: Schritt 11 in Phase T11 (Anfang/Beginn des Schaltvorgangs)
- 12: Schritt 12 in Phase T12 (Eintreten in den Generator-Betrieb)
- 13: Schritt 13 in Phase T13 (Auslegen des aktuellen Ganges)
- 14: Schritt 14 in Phase T14 (Synchronisation)
- 15: Schritt 15 in Phase T15 (Einlegen des neuen Ganges)
- 16: Schritt 16 in Phase T16 (Beenden des Generator-Betriebs)
- 17: Schritt 17 in Phase T17 (Ende des Schaltvorgangs)

- 100: Antriebsvorrichtung

- 110: erstes mehrgängiges Getriebe / Teilgetriebe)
- 111: erste Eingangswelle
- 112: erste Zwischenwelle
- 115: erstes mechanisches Schaltmittel / Schaltmuffe

- 120: zweites mehrgängiges Getriebe / Teilgetriebe)
- 121: zweite Eingangswelle
- 122: zweite Zwischenwelle
- 125: zweites mechanisches Schaltmittel / Schaltmuffe

- 130: Ausgangswelle

- VKM: Verbrennungsmotor bzw. Verbrennungskraftmaschine
- EM-I: erster Elektromotor (Elektrische Maschine)
- EM-II: zweiter Elektromotor (Elektrische Maschine)
- EM-III, EM-IV: dritter bzw. vierter Elektromotor (Elektrische Maschine)

- T11-T17: Phasen bzw. Zeitspannen korrespondierend zu den Schritten 11-17

## Patentansprüche

1. Verfahren (10) zum Steuern eines mechanischen Schaltvorganges in einem Antriebssystem (100), das mindestens ein erstes mehrgängiges Getriebe (110) mit einer ersten Eingangswelle (111) und einem ersten mechanischen Schaltmittel (115) aufweist, wobei von der ersten Eingangswelle (111) kommende Drehmomente auf eine Ausgangswelle (130) des Antriebssystems (100) übertragen werden, und wobei die Drehmomente von einem Verbrennungsmotor (VKM) und mindestens einem ersten Elektromotor (EM-I) erzeugt werden, wobei der erste Elektromotor (EM-I) während des Schaltvorgangs beim Schalten des ersten mechanischen Schaltmittels (115) zumindest zeitweise (T12, T13) zwecks Auslegens eines Ganges des ersten mehrgängigen Getriebes (110) mit dem Verbrennungsmotor (VKM) wirkverbunden und in einem Generator-Betrieb betrieben wird (Schritte 12, 13), wodurch der Verbrennungsmotor (VKM) belastet und das erste mechanische Schaltmittel (115) entlastet werden;
**dadurch gekennzeichnet, dass** der erste Elektromotor (EM-I) während einer ersten Zeitspanne (T12) des Schaltvorgangs, vor dem Auslegen des aktuellen Ganges, zum Übergang in den Generator-Betrieb so gesteuert wird, dass ein anwachsendes Lastmoment erzeugt wird (Schritt 12), und dass der erste Elektromotor (EM-I) während einer zweiten Zeitspanne (T16) des Schaltvorgangs, nach dem Einlegen des neuen Ganges, zum Beenden des Generator-Betriebs so gesteuert wird, dass ein abnehmendes Lastmoment erzeugt wird (Schritt 16).

2. Verfahren (10) zum Steuern eines Schaltvorganges nach Anspruch 1, **dadurch gekennzeichnet, dass** der Verbrennungsmotor (VKM) während des gesamten Schaltvorganges (T11-T17) fortlaufend aktiv betrieben, insbesondere befeuert, wird (Schritte 11-17), wobei der Verbrennungsmotor (VKM) in einer Weise so aktiv betrieben wird,
- dass von dem Verbrennungsmotor (VKM) fortlaufend ein konstantes oder nur geringfügig reduziertes Drehmoment erzeugt wird, oder
- dass von dem Verbrennungsmotor (VKM) insbesondere dann ein reduziertes Drehmoment erzeugt wird, wenn von dem ersten Elektromotor (EM-I) im Generator-Betrieb nur eine begrenzte Last zur Verfügung gestellt wird.

3. Verfahren (10) zum Steuern eines Schaltvorganges nach einem der vorherigen Ansprüche, **dadurch gekennzeichnet, dass** der erste Elektromotor (EM-I) im Generator-Betrieb auch zur elektrischen Energie-Erzeugung genutzt wird, wobei die von dem ersten Elektromotor (EM-I) erzeugte elektrische Energie gespeichert wird oder zur Versorgung eines elektrischen Verbrauchers, insbesondere eines weiteren Elektromotors, bereitgestellt wird.

4. Verfahren (10) zum Steuern eines Schaltvorganges nach einem der vorherigen Ansprüche, **dadurch gekennzeichnet, dass** das Antriebssystem (100) des Weiteren mindestens ein zweites mehrgängiges Getriebe (120) mit einer zweiten Eingangswelle (121) und einem zweiten mechanischen Schaltmittel (125) aufweist, um von der zweiten Eingangswelle kommende Drehmomente auf die Ausgangswelle des Antriebssystems zu übertragen, wobei ein zweiter Elektromotor (EM-II) zusammen mit dem ersten Elektromotor (EM-I) und dem Verbrennungsmotor (VKM) betrieben wird oder alternativ dazu separat betrieben wird.

5. Verfahren (10) zum Steuern eines Schaltvorganges nach Anspruch 4, **dadurch gekennzeichnet, dass** das erste mehrgängige Getriebe als ein erstes Teilgetriebe (110) und das zweite mehrgängige Getriebe als ein zweites Teilgetriebe (120) in zusammenwirkender Weise in einer mehrstufigen Getriebeanordnung, insbesondere in einer Doppelkupplungs-Getriebeanordnung, betrieben werden, wobei das erste Teilgetriebe (110) während einer Zeitspanne (T14) des Schaltvorganges, insbesondere während einer Zeitspanne zur Synchronisation, von der Ausgangswelle (130) abgekoppelt ist, aber der erste Elektromotor (EM-I) mit dem Verbrennungsmotor (VKM) wirkverbunden bleibt.

6. Verfahren (10) zum Steuern eines Schaltvorganges nach Anspruch 4 oder 5, **dadurch gekennzeichnet, dass** zumindest während einer Zeitspanne (T13-T15) mit Hilfe des zweiten Elektromotors (EM-II) und des zweiten Teilgetriebes (120) ein das Antriebssystem (100) aufweisendes Fahrzeug weiter angetrieben, insbesondere beschleunigt, wird während das erste Teilgetriebe (TG1) von der Ausgangswelle (130) des Antriebsystems (100) entkoppelt ist, wodurch eine Zugkraftüberbrückung und/oder Zugkraftunterstützung erzielt wird.

7. Verfahren (10) zum Steuern eines Schaltvorganges nach einem der Ansprüche 4-6, **dadurch gekennzeichnet, dass** das Antriebssystem (100) mit mindestens einen dritten Elektromotor (EM-III) ausgestattet wird, der seriell mit einem der anderen Motoren, insbesondere mit dem ersten Elektromotor (EM-I), verbunden wird.

8. Antriebssystem (100) aufweisend: mindestens ein erstes mechanisches mehrgängiges Getriebe (110) mit einer ersten Eingangswelle (111) und einem ersten mechanischen Schaltmittel (115), um von der ersten Eingangswelle (111) kommende Drehmomente auf eine Ausgangswelle (130) des Antriebssystems (100) zu übertragen, wobei ein Verbrennungsmotor (VKM) und mindestens ein erster Elektromotor (EM-I) die Drehmomente erzeugen, und eine Steuerungs-Vorrichtung (CTR) zum Steuern eines mechanischen Schaltvorganges in dem Antriebssystem (100), wobei der erste Elektromotor (EM-I) während des Schaltvorgangs beim Schalten des ersten mechanischen Schaltmittels (115) zumindest zeitweise (T12, T13) zwecks Auslegens eines Ganges des mehrgängigen Getriebes (110) mit dem Verbrennungsmotor (VKM) wirkverbunden ist, und wobei die Steuerungs-Vorrichtung (CTR) beschaffen ist, den ersten Elektromotor (EM-I) anzusteuern, um ihn in einem Generator-Betrieb zu betreiben, wodurch der erste Elektromotor (EM-I) den Verbrennungsmotor (VKM) belastet und das erste mechanische Schaltmittel (115) entlastet;
**dadurch gekennzeichnet, dass** die Steuerungs-Vorrichtung (CTR) beschaffen ist, den ersten Elektromotor (EM-I) während einer ersten Zeitspanne (T12) des Schaltvorgangs, vor dem Auslegen des aktuellen Ganges, zum Übergang in den Generator-Betrieb so anzusteuern, dass ein anwachsendes Lastmoment erzeugt wird (Schritt 12), und dass die Steuerungs-Vorrichtung (CTR) zudem beschaffen ist, den ersten Elektromotor (EM-I) während einer zweiten Zeitspanne (T16) des Schaltvorgangs, nach dem Einlegen des neuen Ganges, zum Beenden des Generator-Betriebs so anzusteuern, dass ein abnehmendes Lastmoment erzeugt wird.

9. Antriebssystem (100) nach Anspruch 8, **dadurch gekennzeichnet, dass** die Steuerungs-Vorrichtung (CTR) beschaffen ist, den Verbrennungsmotor (VKM) anzusteuern, um den Verbrennungsmotor (VKM) während des gesamten Schaltvorgangs fortlaufend aktiv zu betreiben, insbesondere zu befeuern, und dass die Steuerungs-Vorrichtung (CTR) beschaffen ist, den Verbrennungsmotor (VKM) anzusteuern, um in einer Weise aktiv so betrieben zu werden,
- dass der Verbrennungsmotor (VKM) fortlaufend ein konstantes oder nur geringfügig reduziertes Drehmoment erzeugt, oder
- dass der Verbrennungsmotor (VKM) insbesondere dann ein reduziertes Drehmoment erzeugt, wenn der erste Elektromotor (EM-I) im Generator-Betrieb nur eine begrenzte Last zur Verfügung stellt.

10. Antriebssystem (100) nach einem der Ansprüche 8 oder 9, **dadurch gekennzeichnet, dass** die Steuerungs-Vorrichtung (CTR) beschaffen ist, den Elektromotor (EM-I) anzusteuern, um im Generator-Betrieb auch elektrische Energie zu erzeugen, insbesondere zur Speicherung oder zur Versorgung eines elektrischen Verbrauchers, insbesondere eines weiteren Elektromotors.

11. Antriebssystem (100) nach einem der Ansprüche 7-10, **dadurch gekennzeichnet, dass** das Antriebssystem (100) des Weiteren mindestens ein zweites mehrgängiges Getriebe (120) mit einer zweiten Eingangswelle (121) und einem zweiten mechanischen Schaltmittel (125) aufweist, um von der zweiten Eingangswelle kommende Drehmomente auf die Ausgangswelle des Antriebssystems zu übertragen, und wobei ein zweiter Elektromotor (EM-II) zumindest teil- und/oder zeitweise die Drehmomente erzeugt, und wobei die Steuerungs-Vorrichtung (CTR) beschaffen ist, den zweiten Elektromotor (EM-II) anzusteuern, um zusammen mit dem ersten Elektromotor (EM-I) und/oder dem Verbrennungsmotor (VKM) betrieben zu werden oder alternativ dazu separat betrieben zu werden, insbesondere dass das erste mehrgängige Getriebe als ein erstes Teilgetriebe (110) und das zweite mehrgängige Getriebe als ein zweites Teilgetriebe (120) in zusammenwirkender Weise in einer mehrstufigen Getriebeanordnung, insbesondere in einer Doppelkupplungs-Getriebeanordnung, angeordnet sind, und dass die Steuerungs-Vorrichtung (CTR) beschaffen ist, das erste Teilgetriebe (110) während einer Zeitspanne (T14) des Schaltvorganges, insbesondere während einer Zeitspanne zur Synchronisation, anzusteuern, um von der Ausgangswelle (130) abgekoppelt zu werden.

12. Antriebssystem (100) nach Anspruch 8, **dadurch gekennzeichnet:**
**dass** das mechanische Schaltmittel eine Schaltmuffe (115) oder eine formschlüssige Kupplung ist; und/oder
**dass** das Antriebssystem (100) mindestens einen dritten Elektromotor (EM-III) aufweist, der seriell mit einem der anderen Motoren, insbesondere mit dem ersten Elektromotor (EM-I), verbunden ist.

## Claims

1. A method (10) for controlling a mechanical gear-shifting operation in a drive system (100) comprising at least a first multi-speed transmission (110) with a first input shaft (111) and a first mechanical gear-shifting means (115), wherein torques coming from the first input shaft (111) are transmitted to an output shaft (130) of the drive system (100), and wherein the torques are generated by a combustion engine (VKM) and at by least a first electric motor (EM-I), wherein the first electric motor (EM-I) is operatively connected to the combustion engine (VKM) at least temporarily (T12, T13) during the gear-shifting process when the first mechanical gear-shifting means (115) is shifted for the purpose of selecting a gear of the first multi-gear transmission (110) and is operated in a generator mode (steps 12, 13), as a result of which the combustion engine (VKM) is loaded and the first mechanical gear-shifting means (115) is unloaded;
**characterized in that** the first electric motor (EM-I) is controlled during a first time period (T12) of the gear-shifting operation, prior to the engagement of the current gear, for transition to the generator operation such that an increasing load torque is generated (step 12), and **in that** the first electric motor (EM-I) is controlled during a second time period (T16) of the gear-shifting operation, after the engagement of the new gear, to terminate the generator operation such that a decreasing load torque is generated (step 16).

2. The method (10) for controlling a gear-shifting operation according to claim 1, **characterized in that** the combustion engine (VKM) is continuously actively operated, in particular fired, during the entire gear-shifting operation (T11-T17) (steps 11-17), wherein the combustion engine (VKM) is actively operated in such a manner
- that a constant or only slightly reduced torque is continuously generated by the combustion engine (VKM), or
- **in that** a reduced torque is generated by the combustion engine (VKM) in particular when only a limited load is provided by the first electric motor (EM-I) in generator operation.

3. The method (10) for controlling a gear-shifting operation according to one of the previous claims, **characterized in that** the first electric motor (EM-I) is also used in generator mode for generating electrical energy, wherein the electrical energy generated by the first electric motor (EM-I) is stored or is made available for supplying an electrical consumer, in particular a further electric motor.

4. The method (10) for controlling a gear-shifting operation according to one of the previous claims, **characterized in that** the drive system (100) further comprises at least a second multi-speed transmission (120) with a second input shaft (121) and a second mechanical gear-shifting means (125) for transmitting torques coming from the second input shaft to the output shaft of the drive system, wherein a second electric motor (EM-II) is operated together with the first electric motor (EM-I) and the combustion engine (VKM) or alternatively is operated separately.

5. The method (10) for controlling a gear-shifting operation according to claim 4, **characterized in that** the first multi-speed transmission as a first partial transmission (110) and the second multi-speed transmission as a second partial transmission (120) are operated in a cooperating manner in a multi-stage transmission arrangement, in particular in a double-clutch transmission arrangement, wherein the first partial transmission (110) is uncoupled from the output shaft (130) during a time period (T14) of the gear-shifting operation, in particular during a time period for synchronization, but the first electric motor (EM-I) remaining operatively connected to the combustion engine (VKM).

6. The method (10) for controlling a gear-shifting operation according to claim 4 or 5, **characterized in that**, at least during a time period (T13-T15), a vehicle comprising the drive system (100) is further driven, in particular accelerated, with the aid of the second electric motor (EM-II) and the second partial transmission (120) while the first partial transmission (TG1) is decoupled from the output shaft (130) of the drive system (100), as a result of which tractive force bridging and/or tractive force assistance is achieved.

7. The method (10) for controlling a gear-shifting operation according to one of claims 4-6, **characterized in that** the drive system (100) is provided with at least one third electric motor (EM-III), which is connected in series with one of the other motors, in particular with the first electric motor (EM-I).

8. A drive system (100) comprising: at least a first mechanical multi-speed transmission (110) comprising a first input shaft (111) and a first mechanical gear-shifting means (115) for transmitting torques coming from the first input shaft (111) to an output shaft (130) of the drive system (100), wherein a combustion engine (VKM) and at least a first electric motor (EM-I) generate the torques,
and a control device (CTR) for controlling a mechanical gear-shifting operation in the drive system (100), wherein the first electric motor (EM-I) is at least temporarily (T12, T13) operatively connected to the combustion engine (VKM) during the gear-shifting operation when gear-shifting the first mechanical gear-shifting means (115) for the purpose of disenganging a gear of the multi-gear transmission (110), and wherein the control device (CTR) is adapted to drive the first electric motor (EM-I) to operate in a generator mode, whereby the first electric motor (EM-I) loads the combustion engine (VKM) and unloads the first mechanical shift means (115);
**characterized in that** the control device (CTR) is adapted to drive the first electric motor (EM-I) during a first time period (T12) of the gear-shifting operation, prior to the disengagement of the current gear, for transition to the generator operation so as to generate an increasing load torque (step 12), and **in that** the control device (CTR) is further adapted to control the first electric motor (EM-I) during a second time period (T16) of the gear-shifting operation, after the engagement of the new gear, to terminate the generator operation such that a decreasing load torque is generated.

9. The drive system (100) according to claim 8, **characterized in that** the control device (CTR) is adapted to drive the combustion engine (VKM) to continuously actively operate, in particular fire, the combustion engine (VKM) during the entire gear-shifting operation, and **in that** the control device (CTR) is adapted to drive the combustion engine (VKM) to be actively operated in such a way
- that the combustion engine (VKM) continuously generates a constant or only slightly reduced torque, or
- that the combustion engine (VKM) generates a reduced torque in particular when the first electric motor (EM-I) provides only a limited load in generator operation.

10. The drive system (100) according to one of claims 8 or 9, **characterized in that** the control device (CTR) is arranged to control the electric motor (EM-I) to also generate electrical energy in generator mode, in particular for storage or for supplying an electrical consumer, in particular a further electric motor.

11. The drive system (100) according to any one of claims 7-10, **characterized in that** the drive system (100) further comprises at least a second multi-speed transmission (120) with a second input shaft (121) and a second mechanical switching means (125), to transmit torques coming from the second input shaft to the output shaft of the drive system, and wherein a second electric motor (EM-II) at least partially and/or temporarily generates the torques, and wherein the control device (CTR) is adapted to control the second electric motor (EM-II), in order to be operated together with the first electric motor (EM-I) and/or the combustion engine (VKM) or, alternatively, to be operated separately, in particular **in that** the first multi-speed transmission is operated as a first partial transmission (110) and the second multi-speed transmission is operated as a second partial transmission (120) in a cooperating manner in a multi-stage transmission arrangement, in particular in a double-clutch transmission arrangement, and **in that** the control device (CTR) is adapted to actuate the first partial transmission (110) during a time period (T14) of the gear-shifting operation, in particular during a time period for synchronization, in order to be decoupled from the output shaft (130).

12. The drive system (100) according to claim 8, **characterized in that** the mechanical switching means is a switching sleeve (115) or a positive coupling; and/or **in that** the drive system (100) has at least a third electric motor (EM-III) which is connected in series with one of the other motors, in particular with the first electric motor (EM-I).

## Revendications

1. Procédé (10) pour commander une opération de changement de vitesse mécanique dans un système d'entraînement (100) comprenant au moins une première transmission à plusieurs vitesses (110) avec un premier arbre d'entrée (111) et un premier moyen de changement de vitesse mécanique (115), dans lequel des couples provenant du premier arbre d'entrée (111) sont transmis à un arbre de sortie (130) du système d'entraînement (100), et dans lequel les couples sont générés par un moteur à combustion (VKM) et au moins un premier moteur électrique (EM-I), dans lequel le premier moteur électrique (EM-I) est relié fonctionnellement au moteur à combustion (VKM) au moins temporairement (T12, T13) pendant le processus de changement de vitesse lorsque le premier moyen de changement de vitesse mécanique (115) est déplacé dans le but de sélectionner une vitesse de la première transmission à plusieurs vitesses (110) et fonctionne dans un mode générateur (étapes 12, 13), en conséquence de quoi le moteur à combustion (VKM) est chargé et le premier moyen de changement de vitesse mécanique (115) est déchargé; **caractérisé en ce que** le premier moteur électrique (EM-I) est commandé pendant une première période de temps (T12) de l'opération de changement de vitesse, avant l'engagement de la vitesse actuelle, pour la transition vers le fonctionnement en générateur de sorte qu'un couple de charge croissant est généré (étape 12), et **en ce que** le premier moteur électrique (EM-I) est commandé pendant une seconde période de temps (T16) de l'opération de changement de vitesse, après l'engagement de la nouvelle vitesse, pour terminer le fonctionnement en générateur de sorte qu'un couple de charge décroissant est généré (étape 16).

2. Procédé (10) de commande d'une opération de changement de vitesse selon la revendication 1, **caractérisé en ce que** le moteur à combustion (VKM) est actionné activement en continu, en particulier allumé, pendant toute l'opération de changement de vitesse (T11-T17) (étapes 11-17), dans lequel le moteur à combustion (VKM) est actionné activement de telle sorte que
- qu'un couple constant ou seulement légèrement réduit est généré en permanence par le moteur à combustion (VKM), ou bien
- **en ce qu'**un couple réduit est généré par le moteur à combustion (VKM) en particulier lorsque seule une charge limitée est fournie par le premier moteur électrique (EM-I) en mode générateur.

3. Procédé (10) de commande d'une opération de changement de vitesse selon l'une des revendications précédentes, **caractérisé en ce que** le premier moteur électrique (EM-I) est également utilisé en mode générateur pour produire de l'énergie électrique, l'énergie électrique produite par le premier moteur électrique (EM-I) étant stockée ou mise à disposition pour alimenter un consommateur électrique, notamment un autre moteur électrique.

4. Procédé (10) pour commander une opération de changement de vitesse selon l'une des revendications précédentes, **caractérisé en ce que** le système d'entraînement (100) comprend en outre au moins une deuxième transmission à plusieurs vitesses (120) avec un deuxième arbre d'entrée (121) et un deuxième moyen de changement de vitesse mécanique (125) pour transmettre des couples provenant du deuxième arbre d'entrée à l'arbre de sortie du système d'entraînement, dans lequel un deuxième moteur électrique (EM-II) est exploité conjointement avec le premier moteur électrique (EM-I) et le moteur à combustion (VKM) ou alternativement est exploité séparément.

5. Procédé (10) pour commander une opération de changement de vitesse selon la revendication 4, **caractérisé en ce que** la première transmission à plusieurs vitesses en tant que première transmission partielle (110) et la deuxième transmission à plusieurs vitesses en tant que deuxième transmission partielle (120) sont exploitées de manière coopérative dans un agencement de transmission à plusieurs étages, en particulier dans un agencement de transmission à double embrayage, dans lequel la première transmission partielle (110) est découplée de l'arbre de sortie (130) pendant un laps de temps (T14) de l'opération de changement de vitesse, en particulier pendant un laps de temps pour la synchronisation, mais le premier moteur électrique (EM-I) reste relié fonctionnellement au moteur à combustion (VKM).

6. Procédé (10) de commande d'une opération de changement de vitesse selon la revendication 4 ou 5, **caractérisé en ce que**, au moins pendant une période (T13-T15), un véhicule comprenant le système d'entraînement (100) est encore entraîné, en particulier accéléré, à l'aide du deuxième moteur électrique (EM-II) et de la deuxième transmission partielle (120), tandis que la première transmission partielle (TG1) est découplée de l'arbre de sortie (130) du système d'entraînement (100), ce qui permet d'obtenir un pontage de la force de traction et/ou une assistance de la force de traction.

7. Procédé (10) de commande d'une opération de changement de vitesse selon l'une des revendications 4 à 6, **caractérisé en ce que** le système d'entraînement (100) est pourvu d'au moins un troisième moteur électrique (EM-III), qui est monté en série avec l'un des autres moteurs, en particulier avec le premier moteur électrique (EM-I).

8. Système d'entraînement (100) comprenant : au moins une première transmission mécanique à plusieurs vitesses (110) comprenant un premier arbre d'entrée (111) et un premier moyen de changement de vitesse mécanique (115) pour transmettre des couples provenant du premier arbre d'entrée (111) à un arbre de sortie (130) du système d'entraînement (100), dans lequel un moteur à combustion (VKM) et au moins un premier moteur électrique (EM-I) génèrent les couples,
et un dispositif de commande (CTR) pour commander une opération de changement de vitesse mécanique dans le système d'entraînement (100), dans lequel le premier moteur électrique (EM-I) est au moins temporairement (T12, T13) connecté de manière opérationnelle au moteur à combustion (VKM) pendant l'opération de changement de vitesse lors du changement de vitesse du premier moyen de changement de vitesse mécanique (115) dans le but de sélectionner une vitesse de la transmission à plusieurs vitesses (110), et dans lequel le dispositif de commande (CTR) est adapté pour entraîner le premier moteur électrique (EM-I) pour fonctionner dans un mode générateur, moyennant quoi le premier moteur électrique (EM-I) charge le moteur à combustion (VKM) et décharge le premier moyen de changement de vitesse mécanique (115);
**caractérisé en ce que** le dispositif de commande (CTR) est adapté pour entraîner le premier moteur électrique (EM-I) pendant une première période de temps (T12) de l'opération de changement de vitesse, avant le désengagement de la vitesse actuelle, pour la transition vers le fonctionnement en générateur de manière à générer un couple de charge croissant (étape 12), et **en ce que** le dispositif de commande (CTR) est en outre adapté pour commander le premier moteur électrique (EM-I) pendant une seconde période de temps (T16) de l'opération de changement de vitesse, après l'engagement de la nouvelle vitesse, pour terminer le fonctionnement du générateur de sorte qu'un couple de charge décroissant soit généré.

9. Système d'entraînement (100) selon la revendication 8, **caractérisé en ce que** le dispositif de commande (CTR) est adapté pour piloter le moteur à combustion (VKM) afin de faire fonctionner activement de manière continue, en particulier d'allumer le moteur à combustion (VKM) pendant toute l'opération de changement de vitesse, et **en ce que** le dispositif de commande (CTR) est adapté pour piloter le moteur à combustion (VKM) afin qu'il fonctionne activement de telle sorte que
- que le moteur à combustion (VKM) génère en permanence un couple constant ou seulement légèrement réduit, ou bien
- que le moteur à combustion (VKM) génère un couple réduit, en particulier lorsque le premier moteur électrique (EM-I) ne fournit qu'une charge limitée en mode générateur.

10. Système d'entraînement (100) selon l'une des revendications 8 ou 9, **caractérisé en ce que** le dispositif de commande (CTR) est agencé pour commander le moteur électrique (EM-I) afin qu'il produise également de l'énergie électrique en mode générateur, notamment pour le stockage ou pour l'alimentation d'un consommateur électrique, notamment d'un autre moteur électrique.

11. Système d'entraînement (100) selon l'une quelconque des revendications 7 à 10, **caractérisé en ce que** le système d'entraînement (100) comprend en outre au moins une deuxième transmission à plusieurs vitesses (120) avec un deuxième arbre d'entrée (121) et un deuxième moyen de commutation mécanique (125), pour transmettre des couples provenant du deuxième arbre d'entrée à l'arbre de sortie du système d'entraînement, et dans lequel un deuxième moteur électrique (EM-II) génère au moins partiellement et/ou temporairement les couples, et dans lequel le dispositif de commande (CTR) est adapté pour commander le deuxième moteur électrique (EM-II), afin d'être exploité conjointement avec le premier moteur électrique (EM-I) et/ou le moteur à combustion (VKM) ou, alternativement, être exploité séparément, en particulier **en ce que** la première transmission à plusieurs vitesses est exploitée en tant que première transmission partielle (110) et la deuxième transmission à plusieurs vitesses est exploitée en tant que deuxième transmission partielle (120) en coopération dans un agencement de transmission à plusieurs étages, en particulier dans un agencement de transmission à double embrayage, et **en ce que** le dispositif de commande (CTR) est adapté pour actionner la première transmission partielle (110) pendant une période (T14) de l'opération de changement de vitesse, en particulier pendant une période pour la synchronisation, afin d'être découplé de l'arbre de sortie (130).

12. Système d'entraînement (100) selon la revendication 8, **caractérisé en ce que** le moyen de commutation mécanique est un manchon de commutation (115) ou un accouplement positif ; et/ou **en ce que** le système d'entraînement (100) présente au moins un troisième moteur électrique (EM-III) qui est monté en série avec l'un des autres moteurs, en particulier avec le premier moteur électrique (EM-I).
